(19) **Europäisches Patentamt / European Patent Office / Office européen des brevets**

(11) **EP 3 828 826 B1**

(12) **FASCICULE DE BREVET EUROPEEN**

(45) Date de publication et mention
de la délivrance du brevet:
**01.01.2025 Bulletin 2025/01**

(21) Numéro de dépôt: **21152605.8**

(22) Date de dépôt: **06.06.2019**

(51) Classification Internationale des Brevets (IPC):
**G06T 7/11** *(2017.01)* **G06T 7/90** *(2017.01)*
**G06Q 50/02** *(2024.01)* **G06V 10/56** *(2022.01)*
**G06V 20/10** *(2022.01)*

(52) Classification Coopérative des Brevets (CPC):
**G06T 7/90; G06Q 50/02; G06T 7/11; G06V 10/56;
G06V 20/188;** G06T 2207/10024;
G06T 2207/30188; G06T 2207/30242

(54) **PROCEDE ET SYSTEME D'AIDE A LA DECISION POUR LA GESTION D'UNE PARCELLE AGRICOLE**

VERFAHREN UND SYSTEM ZUR ENTSCHEIDUNGSUNTERSTÜTZUNG FÜR DIE VERWALTUNG EINER LANDWIRTSCHAFTLICHEN PARZELLE

METHOD AND SYSTEM TO ASSIST WITH DECISION-MAKING FOR MANAGING AN AGRICULTURAL PLOT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2018 FR 1800574**

(43) Date de publication de la demande:
**02.06.2021 Bulletin 2021/22**

(62) Numéro(s) de document de la (des) demande(s)
initiale(s) en application de l'article 76 CBE:
**19178739.9 / 3 579 186**

(73) Titulaire: **Agriconnect**
**04100 Manosque (FR)**

(72) Inventeur: **SALLES, José**
**69006 LYON (FR)**

(74) Mandataire: **Be IP**
**Cabinet LTL SAS**
**Centre d'Entreprise et d'Innovation**
**56, Bd Niels Bohr**
**CS 52132**
**69603 Villeurbanne Cedex (FR)**

(56) Documents cités:
**DE-B3- 102012 010 912**

- **RUPINDER KAUR ET AL: "An Optimized Computer Vision Approach to Precise Well-Bloomed Flower Yielding Prediction using Image Segmentation", INTERNATIONAL JOURNAL OF COMPUTER APPLICATIONS, vol. 119, no. 23, June 2015 (2015-06-01), pages 15 - 20, XP055561117, DOI: 10.5120/21376-4038**
- **AGGELOPOULOU A D ET AL: "Yield prediction in apple orchards based on image processing", PRECISION AGRICULTURE, KLUWER ACADEMIC PUBLISHERS, BO, vol. 12, no. 3, 17 August 2010 (2010-08-17), pages 448 - 456, XP019899612, ISSN: 1573-1618, DOI: 10.1007/S11119-010-9187-0**
- **A B PATIL ET AL: "Segmentation and Feature Extraction of Flowers Intended for Image Retrieval: A survey", INTERNATIONAL JOURNAL OF ADVANCED RESEARCH IN ELECTRONICS AND COMMUNICATION ENGINEERING, vol. 5, no. 1, 2016, pages 66 - 69, XP055561091, ISSN: 2278-909X**
- **ASMA NAJJAR ET AL: "Flower image segmentation based on color analysis and a supervised evaluation", COMMUNICATIONS AND INFORMATION TECHNOLOGY (ICCIT), 2012 INTERNATIONAL CONFERENCE ON, IEEE, 26 June 2012 (2012-06-26), pages 397 - 401, XP032226226, ISBN: 978-1-4673-1949-2, DOI: 10.1109/ICCITECHNOL.2012.6285834**

**Description**

## DOMAINE DE L'INVENTION

La présente invention concerne le domaine technique général de l'agriculture de précision.

Plus précisément, la présente invention concerne un procédé et un système associé pour la gestion d'une parcelle agricole afin d'optimiser sa productivité en vue d'une amélioration d'un rendement de production.

## ARRIERE PLAN DE L'INVENTION

Dans un verger, la floraison des arbres fruitiers est hétérogène :

- certains arbres ont trop de fleurs de sorte que les fruits produits sont trop petits par rapport aux standards du marché, et
- d'autres arbres n'ont pas assez de fleurs de sorte que les fruits produits sont trop gros ou trop peu nombreux.

C'est la raison pour laquelle les agriculteurs pratiquent :

- l'éclaircissage des arbres fruitiers pour enlever les fleurs des arbres ayant trop de fleurs, et
- l'introduction d'engrais et/ou d'intrants chimiques dans le sol afin de favoriser la floraison des arbres fruitier (et/ou limiter la chute naturelle des fleurs) lorsque ceux-ci n'ont pas assez de fleurs.

L'éclaircissage est un procédé (manuel, mécanique ou chimique) consistant à laisser le nombre optimal de fleurs (puis de fruits) sur l'arbre afin d'obtenir le meilleur rendement possible en équilibrant la qualité, le calibre des fruits et le volume de production.

Les phases d'éclaircissage et de fourniture d'engrais sont donc importantes dans le domaine de la production de fruits à partir d'arbres fruitiers, et notamment de pommiers, afin d'assurer une production optimale de fruits en termes de qualité, de quantité et de taille.

A l'heure actuelle, il n'existe actuellement aucune solution pour estimer le taux de floraison de chaque arbre fruiter d'un verger (qui peut comporter entre 2500-3000 arbres par hectare).

En raison de l'inexistence de procédé pour cartographier les taux de floraison intra-parcellaire, les experts agronomes donnent actuellement une estimation du taux moyen de floraison d'un verger en observant quelques arbres. Cette estimation est généralement minorée par l'arboriculteur, par crainte de ne pas obtenir suffisamment des fruits par arbre et donc de limiter sa production.

Du fait que la floraison est hétérogène et le traitement d'éclaircissage chimique homogène, l'arboriculteur se retrouve à devoir réaliser un éclaircissage manuel, très onéreux, arbre par arbre afin d'optimiser sa production.

Rupinder Kaur et al.: "An Optimized Computer Vision Approach to Précisé Well-Bloomed Flower Yielding Prédiction using Image Segmentation", International Journal of Computer Applications, vol. 119, no. 23, juin 2015, pages 15-20 décrit des techniques d'informatisation par seuillage pour extraire les fleurs et les code couleur HSV, segmentation par l'algorithme Otsu avec des filtres morphologiques pour acquérir le rendement fin des fleurs de roses très épanouies à partir d'un instantané numérique. Cette technique permet d'obtenir une reconnaissance, un rendement et un comptage précis des fleurs de roses.

Aggelopoulou et al.: "Yield prédiction in apple orchards based on image processing", Précision Agriculture, KLuwer Academic Publishers, BO, vol. 12, no. 3, 17 août 2010, pages 448-456 décrit l'utilisation de cartes de distribution de la floraison des pommiers pour la gestion des vergers pendant la saison de croissance.

Un but de la présente invention est de proposer un procédé et un système associé d'aide à la décision pour la gestion d'une exploitation agricole dans son ensemble, afin d'optimiser le rendement de productivité tout en préservant les ressources.

Plus précisément, un but de la présente invention est de proposer un procédé et un système pour cartographier les taux de floraison intra-parcellaire des arbres fruitiers d'un verger.

## BREVE DESCRIPTION DE L'INVENTION

A cet effet, l'invention propose un procédé d'aide à la décision pour la gestion d'un verger d'arbres fruitiers, le procédé comprenant les phases suivantes :

- Réception d'une pluralité d'images numériques acquises en couleur le long des rangs du verger, chaque image représentant un élément fruitier respectif du verger,

- Traitement de la pluralité d'images acquises, ladite phase de traitement comprenant, pour chaque image courante de la pluralité d'images , les étapes suivantes :

  ○ Détection des objets d'intérêt dans chaque image courante,
  ○ Comptage du nombre d'objets d'intérêt détecté dans chaque image courante,
  ○ Détermination d'un niveau de floraison pour chaque image courante en fonction du nombre d'objets d'intérêt compté pour ladite image courante,

- Post-traitement de la pluralité d'images traitées, ladite phase de post-traitement comprenant les étapes suivantes :

  ○ Fusion les niveaux de floraison des éléments fruitiers par zones le long des rangs du verger,
  ○ Génération d'une carte des niveaux de floraisons des éléments fruitiers du verger.

Des aspects préférés mais non limitatifs du procédé selon l'invention sont les suivants :

- l'étape de fusion peut consister à attribuer à chaque élément fruitier considéré dans un rang du verger le niveau de floraison des éléments fruitiers voisins dudit élément fruitier considéré dans son rang si au moins un élément fruitier voisin précédent l'élément fruitier considéré et au moins un élément fruitier voisin suivant l'élément fruitier considéré dans son rang ont un même niveau de floraison différent du niveau de floraison de l'élément fruitier considéré ;
- l'étape de comptage du nombre d'objets d'intérêt détectés peut consister à compter un nombre de groupements de pixels connexes représentatifs d'au moins un objet d'intérêt et/ou un nombre de pixels représentatifs d'au moins un objet d'intérêt ;
- l'étape de détermination d'un niveau de floraison pour chaque image courante peut consister à assigner un niveau de floraison à ladite image courante en fonction du nombre d'objets d'intérêt comptés dans ladite image courante, chaque niveau de floraison correspondant à une plage de nombres d'objets d'intérêt,
- le procédé peut également comprendre une étape d'affichage des niveaux de floraison associés à la pluralité d'image sur une vue du verger, ladite étape d'affichage comprenant les sous-étapes consistant à :

  ○ pour chaque image courante, détecter la position dans la vue du verger, de l'élément fruitier représenté dans l'image courante à partir de données de position associées à ladite image courante, les données de position correspondant à la position d'un dispositif d'acquisition d'image lors de l'acquisition de l'image courante,
  ○ superposer une forme colorée sur la position détectée dans la vue du verger, la couleur de la forme étant représentative d'un niveau de floraison de l'élément fruitier,

- l'étape d'affichage peut également comprendre une sous-étape consistant à afficher, pour chaque niveau de floraison, une image échantillon correspondant à une image initiale acquise dont le nombre d'objets d'intérêt calculé satisfait audit niveau de floraison,
- l'étape de détermination d'un niveau de floraison peut comprendre une sous-étape consistant à déterminer des seuils de chaque niveau de floraison en fonction du nombre d'objets d'intérêt calculés $T_{max}$ pour l'élément fruitier le plus fleuri en appliquant la formule suivante : Seuil n = $T_{max}$ * (1-(n/15)), avec $1 \leq n \leq 4$ ;
- l'étape de détermination d'un niveau de floraison peut comprendre une sous-étape consistant à déterminer des seuils de chaque niveau de floraison en fonction d'une courbe de tendance d'un histogramme des nombres d'objets d'intérêt calculés pour l'ensemble des éléments fruitiers du verger ;
- la phase de post-traitement peut également comprendre une étape consistant à envoyer la carte des niveaux de floraisons générée à une console de modulation d'un dispositif d'éclaircissage, la console de modulation permettant de régler la quantité de produit chimique d'éclaircissage à pulvériser sur chaque élément fruitier en fonction du niveau de floraison attribué audit élément fruitier.

L'invention concerne également un système d'aide à la décision pour la gestion d'un verger d'arbres fruitiers, remarquable en ce qu'il comprend des moyens pour la mise en oeuvre du procédé décrit ci-dessus.

L'invention concerne également un produit programme d'ordinateur comprenant des instructions de code de programmation destinées à exécuter les étapes du procédé décrit ci-dessus lorsque ledit programme est exécuté sur un ordinateur.

**BREVE DESCRIPTION DES DESSINS**

D'autres avantages et caractéristiques du procédé et du système d'aide à la décision pour la gestion d'un verger d'arbres fruitiers ressortiront mieux de la description qui va suivre de plusieurs variantes d'exécution, données à titre d'exemples non limitatifs, à partir des dessins annexés sur lesquels :

- la figure 1 est une représentation schématique d'un système d'aide à la décision pour la gestion d'un verger d'arbres fruitiers ;
- la figure 2 est une représentation schématique d'un cône de conversion entre un codage d'image en composantes Rouge Vert Bleu et un codage d'image en composantes Teinte Saturation Luminosité ;
- la figure 3 est une représentation schématique d'étapes d'un procédé d'aide à la décision pour la gestion d'un verger d'arbres fruitiers ;

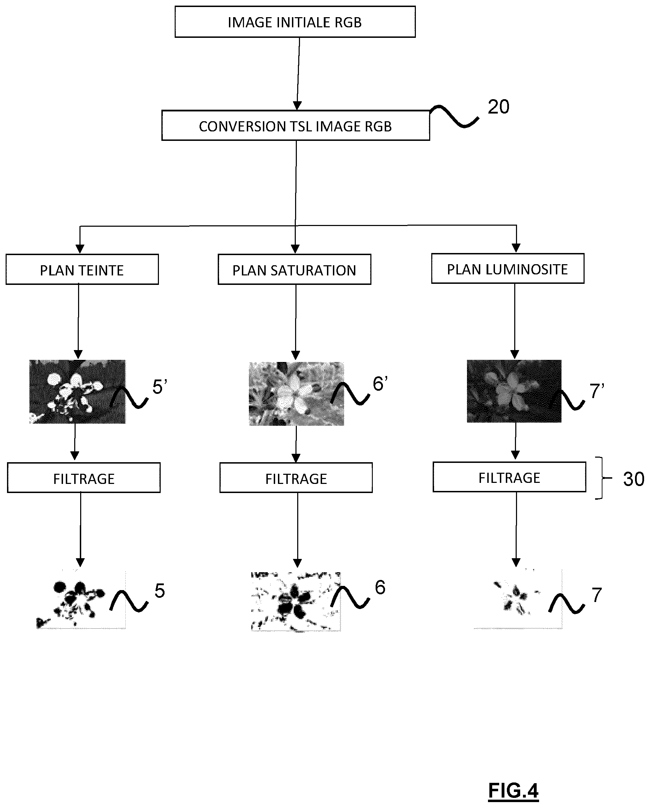

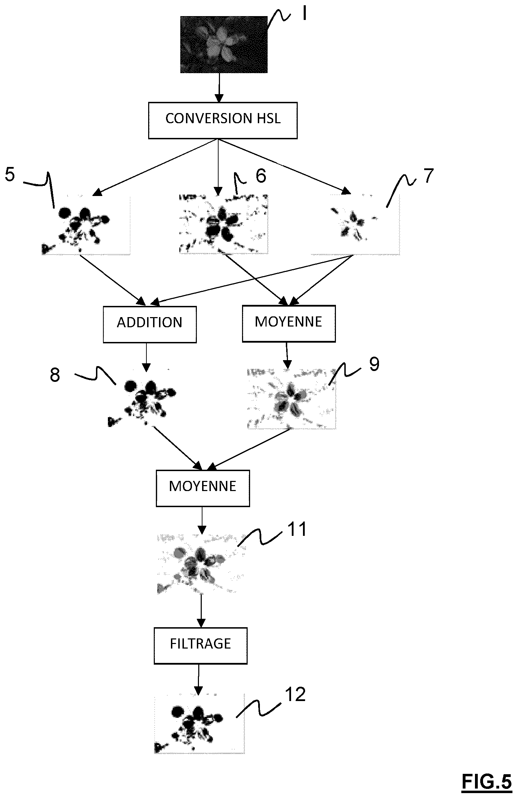

- les figures 4 à 6 sont des représentations schématiques d'étapes d'une phase de traitement du procédé d'aide à la décision ;
- la figure 7 est un exemple de prise de vue d'un verger dans laquelle des niveaux de floraison ont été représentés pour trois rangs du verger ;
- la figure 8 est un exemple de prise de vue d'un verger dans laquelle les niveaux de floraison illustrés à la figure 7 ont été fusionnés par zone.

## DESCRIPTION DETAILLEE DE L'INVENTION

On va maintenant décrire plus en détails des exemples de procédé et système de gestion selon l'invention en référence aux figures. Dans ces différentes figures, les éléments équivalents sont désignés par la même référence numérique.

A l'intérieur d'un verger d'une même variété de pommier, la floraison des arbres est hétérogène. Cependant l'éclaircissage chimique réalisé est identique pour tous les arbres sans prendre en compte les différences de taux de floraison. Le procédé et le système décrit dans la suite permettent de moduler l'éclaircissage de chaque arbre en fonction de son niveau de floraison associé.

### 1. Principe général

Le procédé selon l'invention comprend :

- la réception 10 d'images acquises,
- une phase de traitement des images acquises afin de déterminer un niveau de floraison associé à des éléments fruitiers constituant le verger, et éventuellement
- une phase de post-traitement consistant à générer une carte des niveaux de floraisons des éléments fruitiers du verger.

Les images traitées sont des images numériques acquises en couleur. Cette couleur est codée en niveaux de Rouge, de Vert et de Bleu (ou « RGB » selon l'acronyme anglo-saxon de « Red-Green-Blue »). L'acquisition des images consiste à photographier les éléments fruitiers constituant le verger à l'aide d'un dispositif d'acquisition d'image numérique en couleur. Les éléments fruitiers peuvent être les arbres fruitiers du verger et/ou des bandes fruitières (correspondant aux branches s'étendant entre deux troncs d'arbres fruitiers successifs le long d'un rang d'arbres fruitiers du verger).

Le dispositif d'acquisition peut être monté sur un véhicule mobile - tel qu'un tracteur agricole - et comprendre par exemple :

- un support,
- un capteur optique incluant une pluralité de cellules élémentaires photosensibles (tel qu'une caméra) monté sur le support, et
- un (ou plusieurs) organe(s) d'éclairage (tel qu'un flash) pour illuminer l'élément fruitier d'intérêt lors de l'acquisition d'une image,
- un appareil de détection de position - par exemple basé sur le système GPS (de l'anglais « *Global Positioning System* ») - pour détecter la position du capteur optique lors de l'acquisition de chaque image,
- un contrôleur programmé pour piloter le capteur, l'organe d'éclairage et l'appareil de détection de position.

Un tel dispositif d'acquisition est connu de l'homme du métier et ne sera pas décrit plus en détails dans la suite.

Le principe d'acquisition est le suivant. Le dispositif d'acquisition est déplacé le long des rangs d'arbres fruitiers du verger. Pour chaque arbre fruitier et/ou bande fruitière du verger, une image est acquise. Ainsi, chaque image acquise est associée à un élément fruitier d'intérêt respectif. A partir de la position du capteur (détectée par l'appareil de détection de position lors de l'acquisition de l'image), il est possible d'en déduire la position de l'élément fruitier d'intérêt dans le verger.

Les phases de traitement et d'éventuel post-traitement du procédé peuvent être mises en oeuvre dans un système d'aide à la décision intégré ou distant du dispositif d'acquisition. Notamment, le système d'aide à la décision comprend un programme pour réaliser une ou plusieurs des étapes du procédé décrit dans la suite.

Le système d'aide à la décision peut être composé d'une (ou plusieurs) station(s) de travail, et/ou d'un (ou plusieurs) ordinateur(s) ou peut être de tout autre type connu de l'homme du métier. Le système de traitement peut par exemple comprendre un téléphone portable, une tablette électronique (tel qu'un IPAD®), un assistant personnel (ou « *PDA* », sigle de l'expression anglo-saxonne « *Personal Digital Assistant »),* etc.

Dans tous les cas, le système comprend un processeur programmé pour permettre le traitement des images acquises par le dispositif d'acquisition.

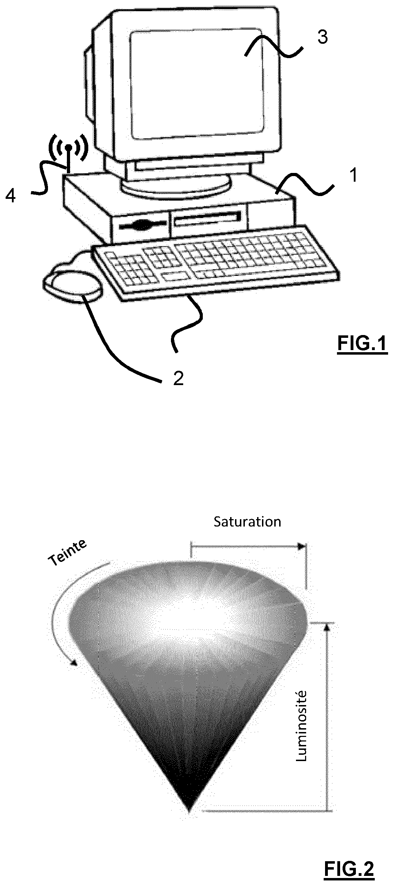

En référence à la figure 1, un exemple de système d'aide à la décision est illustré. Il comprend :

- des moyens de traitement 1 tels qu'un processeur,
- des moyens de saisie 2 tels qu'un clavier et une souris,
- des moyens d'affichage 3 tels qu'un écran (éventuellement tactile), et
- des moyens d'émission/réception 4 avec ou sans fil - tels qu'un(ou plusieurs) câble(s) de connexion et/ou une (ou plusieurs) antenne(s) - pour échanger des données (réception des images acquises par le dispositif d'acquisition, et des coordonnées GPS, etc.) via un réseau de communication - tel que le réseau Internet.

Le système d'aide à la décision est utilisé pour la mise en oeuvre d'un procédé simple, léger et robuste de traitement d'images permettant d'établir une carte relative de la floraison (fleurs et boutons de fleur) des éléments fruitiers du verger, et dont différentes variantes de réalisation vont maintenant être décrites plus en détails.

Le procédé selon l'invention sera décrit en référence au traitement d'une image, étant entendu que les étapes de la phase de traitement sont répétées pour chaque image acquise.

## 2. *Procédé d'aide à la décision*

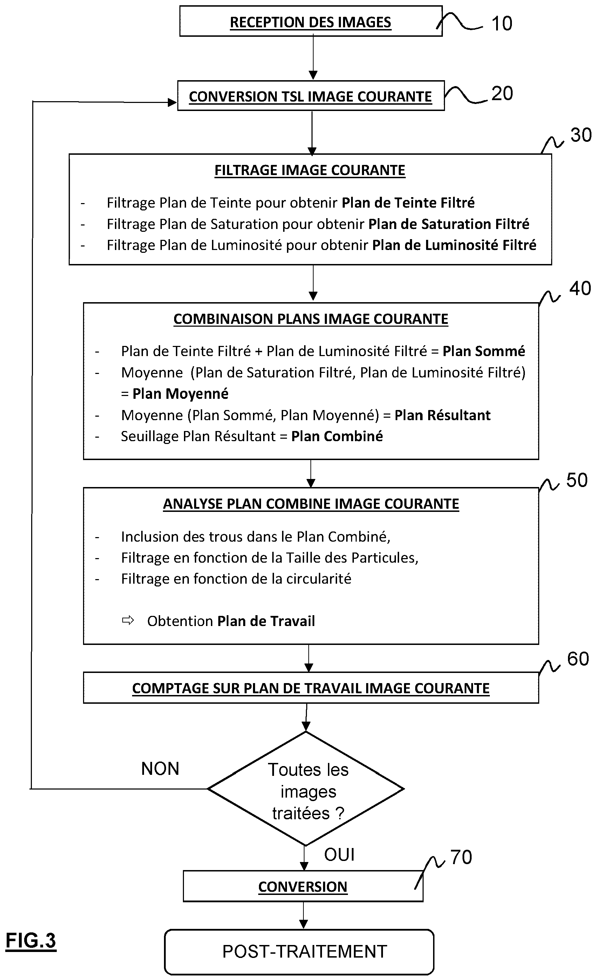

En référence à la figure 3, on a illustré les différentes étapes de la phase de traitement du procédé selon l'invention.

### 2.1. *Conversion TSL*

Une première étape 20 du procédé consiste à convertir l'image numérique couleur RVB acquise I en une image convertie TSL. Comme indiqué précédemment, l'image numérique acquise I est codée en niveaux de Rouge, de Vert et de Bleu.

L'étape de conversion 20 consiste à coder l'image en niveaux de Teinte, de Saturation et de Luminosité.

Plus précisément et en référence à la figure 2, chaque composante de couleur de chaque pixel de l'image acquise I dans un espace de couleurs RVB (plan Rouge, plan Vert, plan Bleu) est convertie en :

- une composante de Teinte (T),
- une composante de Saturation (S), et
- une composante de Luminosité (L)

du pixel dans un espace de couleurs TSL.

Différents modes de calcul connus de l'homme du métier peuvent être utilisés pour convertir les composantes Rouge Vert Bleu d'un pixel en composante Teinte Saturation Luminosité.

A titre purement indicatif, un exemple de formules permettant de convertir les composantes RVB d'un pixel en composantes TSL est donné ci-dessous :

A partir des composantes RVB d'un pixel, on peut calculer les variables intermédiaires suivantes :

- $R' = R/255$
- $G' = G/255$
- $B' = B/255$
- $Cmax = \max(R', G', B')$
- $Cmin = \min(R', G', B')$
- $\Delta = Cmax - Cmin$

On calcule alors la Teinte H comme suit :

$$H = \begin{cases} 0° & \Delta = 0 \\ 60° \times \left(\frac{G'-B'}{\Delta} mod 6\right) & , C_{max} = R' \\ 60° \times \left(\frac{B'-R'}{\Delta} + 2\right) & , C_{max} = G' \\ 60° \times \left(\frac{R'-G'}{\Delta} + 4\right) & , C_{max} = B' \end{cases}$$

On calcule la Saturation S comme suit :

$$S = \begin{cases} 0 & , \Delta = 0 \\ \frac{\Delta}{1-|2L-1|} & , \Delta <> 0 \end{cases}$$

On calcule la Luminosité L comme suit :

$$L = (Cmax + Cmin) / 2$$

Bien entendu, la présente invention ne se limite pas à l'application des formules ci-dessus pour la conversion de l'image RVB en image convertie TSL, et d'autres formules connues de l'état de la technique peuvent être utilisées pour réaliser cette conversion.

Une fois l'étape de conversion réalisée, les composantes de chaque pixel de l'image convertie peuvent s'exprimer dans trois plans (ou espaces) distincts : un plan de Teinte 5', un plan de Saturation 6' et un plan de Luminosité 7'. Dans chaque plan, la composante associée peut prendre une valeur comprise entre 0 et 255.

*2.2. Filtrage*

Dans une deuxième étape 30 du procédé, un filtrage de l'image convertie TSL est mis en oeuvre sur chacune des composantes Teinte Saturation et Luminosité de chaque pixel.

*2.2.1. Filtrage de la Teinte*

Plus précisément, dans le plan de Teinte 5', une sous-étape de seuillage de l'image convertie est mise en oeuvre. Ce seuillage permet de filtrer la couleur de l'objet d'intérêt, comme par exemple le rose de la fleur ou du bouton de fleur.

La première valeur seuil de Teinte dépend de l'espèce et de la variété d'arbre fruitier considéré.

Par exemple, la couleur rose des fleurs de pommier de type Granny Smith est plus soutenu que la couleur rose des fleurs de pommier de type Royal Gala. La première valeur seuil de Teinte peut être renseignée par l'utilisateur ou déterminée à partir d'une base de données en fonction de l'espèce et de la variété de l'arbre fruitier considéré.

A l'issue de la sous-étape de seuillage dans le plan de Teinte 5', un plan de Teinte filtré 5 est obtenu dans lequel seul les pixels (ou point) dont la valeur est inférieure à la première valeur seuil de Teinte sont retenus. La valeur de chaque pixel dans le plan de Teinte filtré 5 est alors soit de 0 soit de 255.

*2.2.2. Filtrage de la saturation*

Dans le plan de Saturation 6', une sous-étape de seuillage de l'image convertie pour supprimer les pixels non blancs est mise en oeuvre.

La première valeur seuil de Saturation choisie peut être de 255 pour ne conserver du plan de Saturation que les pixels dont la saturation est maximale, ou proche de 255 (par exemple 245, 235, ..., 192).

A l'issue de la sous-étape de seuillage dans le plan de Saturation 6', un plan de Saturation filtré 6 est obtenu dans lequel seuls les pixels dont la valeur est supérieure à la première valeur seuil de Saturation sont retenus. La valeur de chaque pixel dans le plan de Saturation filtré 6 est alors soit de 0 soit de 255.

*2.2.3. Filtrage de Luminosité*

Dans le plan de Luminosité 7', une sous-étape de seuillage de l'image convertie pour supprimer les pixels non lumineux est mise en oeuvre.

La première valeur seuil de Luminosité choisie dépend :

- de la moyenne de Luminosité des pixels de l'image convertie,
- de l'écart type de Luminosité des pixels de l'image convertie, et
- des caractéristiques du dispositif d'acquisition (et notamment de caractéristiques du capteur photosensible utilisé dans le dispositif d'acquisition),
- des conditions de prise de vue.

Pour chaque image traitée, la sous-étape de seuillage dans le plan de luminosité comprend :

- le calcul de la Luminosité moyenne des pixels dans le plan de luminosité (« Moyenne » dans la formule ci-après),
- le calcul de l'écart type de Luminosité des pixels dans le plan de luminosité (« EcartType » dans la formule ci-après).

A partir de la moyenne et de l'écart type ainsi calculés et en tenant compte des paramètres techniques du dispositif d'acquisition et des conditions de prise de vue, une première valeur seuil de Luminosité est déterminée selon la formule suivante :

$$\text{Valeur seuil de Luminosité} = \text{Moyenne} + \text{Coeff}_{AP} \times \text{EcartType}$$

Où : $\text{Coeff}_{AP}$ est un coefficient défini en fonction des caractéristiques du dispositif d'acquisition et des conditions de prise de vue.

Grâce aux expérimentations conduites depuis plusieurs années, les inventeurs ont établi une table de correspondance entre les caractéristiques du dispositif d'acquisition, les conditions de prise de vue et le $\text{Coeff}_{AP}$.

| Conditions de prise de vue | Caractéristiques dispositif d'acquisition | Coefficients pour un dispositif d'acquisition donné |
| --- | --- | --- |
| Face au soleil | Taille capteur<br>Vitesse obturation | $\text{Coeff}_1$ |
| Dos au soleil | Ouverture de Focale<br>ISO | $\text{Coeff}_2$ |
| | | Condition $\text{Coeff}_2 > \text{Coeff}_1$ |

La première valeur seuil de Luminosité ainsi calculée est utilisée dans la sous-étape de seuillage de l'image convertie dans le plan de Luminosité.

A l'issue de la sous-étape de seuillage dans le plan de Luminosité 7', un plan de Luminosité filtré 7 est obtenu dans lequel seuls les pixels dont la valeur est supérieure à la première valeur seuil de Luminosité sont retenus. La valeur de chaque pixel dans le plan de Luminosité filtré 7 est alors soit de 0 soit de 255.

*2.3. Combinaisons sur les plans filtrés*

L'étape de filtrage permet d'obtenir un plan de Teinte filtré 5, un plan de Saturation filtré 6 et un plan de Luminosité filtré 7.

Dans une autre étape 40 du procédé, les plans filtrés sont combinés pour ne laisser apparaître, sur une image finale traitée (appelée « *plan de Travail* »), que les objets d'intérêts (i.e. fleurs et boutons de fleur de l'élément fruitier d'intérêt).

L'objectif de ces combinaisons de plans est d'éliminer les bruits présents dans l'image initiale (fleurs du second plan présents sur des éléments fruitiers situés derrière l'élément fruitier d'intérêt, etc.).

L'étape de combinaison peut comprendre une sous-étape consistant à additionner le plan de Teinte filtré 5 et le plan de Luminosité filtré 7. Ceci permet d'obtenir un plan Intermédiaire 8 dans lequel la majorité des boutons et des fleurs de l'image initiale sont reconstituées, notamment lorsque les images ont été acquises en étant dos au soleil. En variante, l'étape de combinaison peut comprendre une sous-étape consistant à faire une moyenne pondérée du plan de Teinte filtré 5 et du plan de Saturation filtré 6 selon la formule suivante :

$$\text{Plan Intermédiaire} = ((2 \times \text{Plan de Teinte filtré}) + \text{Plan de Saturation filtré}) / 3.$$

Ceci permet également d'obtenir un plan Intermédiaire 8 dans lequel la majorité des boutons et des fleurs de l'image initiale sont reconstituées, notamment lorsque les images ont été acquises en faisant face au soleil. La valeur de chaque pixel dans le plan Intermédiaire 8 est alors soit de 0 soit de 255.

L'étape de combinaison peut également comprendre une sous-étape consistant à moyenner le plan de Saturation filtré 6 et le plan de Luminosité filtré 7. Plus précisément, la valeur de chaque pixel du plan de Saturation filtré 6 est sommée à la valeur du pixel correspondant dans le plan de Luminosité filtré 7, et le résultat de cette somme est divisé par deux pour obtenir un plan Moyenné 9 selon la formule suivante :

$$\text{Plan Moyenné} = (\text{Plan de Saturation filtré} + \text{Plan de Luminosité filtré})/2.$$

La valeur de chaque pixel dans le plan de Moyenné 9 est alors soit de 0, soit de 128, soit de 255. Cette sous-étape de moyennage permet d'accentuer les parties blanches de l'objet d'intérêt (fleur ou bouton de fleur) en réduisant en même temps les bruits du second plan.

Le procédé peut de plus comprendre une sous-étape additionnelle consistant à faire une moyenne du plan Intermédiaire 8 et du plan Moyenné 9 pour obtenir un plan Résultant 11 selon la formule suivante :

$$\text{Plan Résultant} = (\text{Plan Intermédiaire} + \text{Plan Moyenné})/2.$$

Chaque pixel du plan Résultant 11 peut être associé à l'une des valeurs suivantes : 0, 64, 128, 191 ou 255. Cette étape optionnelle permet d'accentuer la réduction des bruits du second plan.

Enfin, une sous-étape de filtrage par seuillage du plan Résultant 11 peut être mise en oeuvre pour obtenir un plan Combiné 12. La première valeur seuil de filtrage choisie peut être de 123 pour ne conserver du plan Résultant 11 (ou du plan Intermédiaire 8) que les pixels dont la valeur est représentative d'un objet d'intérêt. La valeur de chaque pixel dans le plan Combiné 12 est alors soit de 0, soit de 255.

Avantageusement, le procédé peut également comprendre :

- une étape de formation d'un plan de Troncs par seuillage du plan de Teinte, du plan de Saturation et du plan de Luminosité, pour conserver dans le plan de Troncs les pixels représentatifs des troncs et/ou des branches de l'élément fruitier, l'étape de formation d'un plan de troncs incluant les sous-étapes de combinaison suivante :

    - filtrer les composantes de Teinte Saturation et Luminosité de l'image convertie TSL dans les plans de Teinte, de Saturation et de Luminosité selon des deuxièmes valeurs seuil de Teinte de Saturation et de Luminosité pour obtenir : un plan de Teinte Troncs filtré, un plan de Saturation Troncs filtré et un plan de Luminosité Troncs filtré,
    - combiner les plans de Teinte Troncs filtré, de Saturation Troncs filtré et de Luminosité Troncs filtré obtenir le plan de Troncs ;

- une étape de formation d'un plan de feuilles par seuillage du plan de Teinte, du plan de Saturation et du plan de Luminosité, pour conserver dans le plan de feuilles les pixels représentatifs des feuilles de l'élément fruitier, l'étape de formation d'un plan de Feuilles incluant les sous-étapes de combinaison suivante :

    - filtrer les composantes de Teinte Saturation et Luminosité de l'image convertie TSL dans les plans de Teinte, de Saturation et de Luminosité selon des troisièmes valeurs seuil de Teinte de Saturation et de Luminosité pour obtenir : un plan de Teinte Feuilles filtré, un plan de Saturation Feuilles filtré et un plan de Luminosité Feuilles filtré,
    - combiner les plans de Teinte Feuilles filtré, de Saturation Feuilles filtré et de Luminosité Feuilles filtré pour obtenir le plan de Feuilles.

Dans ce cas, l'étape de combinaison comporte les sous-étapes suivantes :

- additionner le plan de Teinte filtré 5 et le plan de Luminosité filtré 7 pour obtenir un plan Intermédiaire 8,
- moyenner le plan de Saturation filtré 6 et le plan de Luminosité filtré 7 pour obtenir un plan Moyenné 9,
- moyenner le plan Intermédiaire 8 et le plan Moyenné 9 pour obtenir un plan Résultant 11,
- soustraire les plans de troncs et de feuilles du plan Résultant 11 pour obtenir un plan Résultant Soustrait, et
- filtrer le plan Résultant Soustrait par seuillage en fonction d'une valeur seuil de filtrage prédéfinie pour obtenir le plan Combiné 12.

*2.4. Calculs sur le plan Combiné*

L'étape de combinaison 40 sur les plans filtrés de Teinte, de Saturation et de Luminosité 5, 6, 7 permet d'obtenir un plan Combiné 12 dans lequel les bruits ont été majoritairement éliminés, notamment les bruits du second plan.

Des calculs (remplissage connexe et filtrages) sont ensuite réalisés sur ce plan Combiné 12 pour supprimer les derniers bruits présents dans l'image initiale I afin de ne conserver que les objets représentatifs d'un niveau de floraison de l'élément fruitier d'intérêt.

L'étape de calcul 50 sur le plan Combiné 12 peut comprendre les sous-étapes suivantes (prises indépendamment ou en combinaison) :

- une sous-étape de remplissage connexe,
- une sous-étape de filtrage en fonction de la taille des groupements de pixels connexes représentatifs d'un objet d'intérêt ou d'une portion de cet objet d'intérêt, et
- une sous-étape de filtrage en fonction de la circularité des groupements de pixels connexes.

### 2.4.1. *Remplissage*

La sous-étape de remplissage consiste à remplir les groupements de pixels connexes représentatifs d'objets d'intérêt et présentant des cavités fermées (assimilable à des trous) pour obtenir un plan Combiné Rempli.

Cette étape peut être mise en oeuvre en utilisant des fonctions morpho-mathématique de traitement d'image (telles qu'une dilatation morphologique suivie par une érosion morphologique) ou toute autre technique de traitement d'image connue de l'homme du métier (algorithme de croissance de régions, etc.).

La sous-étape de remplissage permet de reconstituer les particules (pétale, etc.) formant les objets d'intérêt dans le plan Combiné 12.

### 2.4.2. *Filtrage de taille*

La sous-étape de filtrage de taille consiste à supprimer du plan Combiné 12 (ou du plan Combiné Rempli) les groupements de pixels connexes dont le nombre de pixels est inférieur à une valeur seuil de taille (par exemple supprimer du plan Combiné 12 les groupements de cinq pixels connexes ou moins).

Cette sous-étape de filtrage de taille permet d'obtenir un plan Combiné Filtré Taille (ou un plan Combiné Rempli & Filtré Taille) dans lequel les derniers bruits du second plan ont été éliminés.

### 2.4.3. *Filtrage de la circularité*

La sous-étape de filtrage en fonction de la circularité des groupements de pixels connexes présents dans le plan Combiné 12 (ou dans le plan Combiné Rempli, ou dans le plan Combiné Rempli & Filtré Taille) permet d'éliminer dudit plan les objets non-circulaires (faux positifs) constituant des bruits présents au premier plan, tels que des mousses recouvrant une branche de l'élément fruitier ou un câble tuteur de l'élément fruitier, etc.

Ce filtrage de la circularité est mis en oeuvre en utilisant des fonctions de traitement d'image connues de l'homme du métier et qui ne seront pas décrites plus en détails dans la suite.

### 2.5. *Comptage*

A l'issue de l'étape d'analyse du plan Combiné 12, un plan de Travail 13 est obtenu. Ce plan de Travail 13 constitue une image finale traitée à partir de laquelle le niveau de floraison de l'élément fruitier d'intérêt est estimé.

Une étape 60 de comptage des objets d'intérêt (fleur ou bouton de fleur) présents dans le plan de Travail 13 est mise en oeuvre.

Le comptage des objets d'intérêt peut être réalisé :

- soit par un comptage du nombre de pixels représentatifs des objets d'intérêt,
- soit par un comptage du nombre de groupement (i.e. d'amas) de pixels connexes représentatifs d'objets d'intérêt.

Le fait de compter un nombre d'amas de pixels plutôt que le nombre de pixels permet de rendre le procédé indépendant du stade de floraison de l'élément fruitier. En effet, en comptant uniquement le nombre de pixels représentatifs d'objets d'intérêt, un élément fruitier n'incluant pas de fleurs peut être considéré comme peu fleuri même s'il comprend un grand nombre de boutons de fleur.

En variante, l'étape de comptage peut consister à combiner un comptage du nombre de pixels représentatifs des objets d'intérêt, et un comptage du nombre de groupement (i.e. d'amas) de pixels connexes représentatifs d'objets d'intérêt. Par exemple le comptage peut comprendre les sous-étapes suivantes :

- compter le nombre de pixels représentatifs des objets d'intérêt,
- diviser le nombre de pixels comptés par un coefficient prédéfini (égal au nombre de pixels minimum formant une particule élémentaire) pour estimer un nombre de particules,
- compter le nombre de groupement de pixels connexes représentatifs d'objets d'intérêt,
- calculer la moyenne entre le nombre de particules estimé et le nombre de groupement de pixels connexes compté.

L'étape de comptage 60 (mise en oeuvre en utilisant tout algorithme de traitement connu de l'homme du métier) permet de calculer un nombre d'objets d'intérêt détectés pour l'image courante traitée (soit un nombre de pixels constituant les objets d'intérêt, soit un nombre d'amas de pixels constituant les objets d'intérêt, soit une combinaison des deux).

Connaissant la position du dispositif d'acquisition lors de l'acquisition de chaque image grâce à l'appareil de détection de position (qui permet d'associer les coordonnées GPS du dispositif d'acquisition à chaque image acquise), il est possible de déterminer avec précision la position, dans le verger, de l'élément fruitier pour lequel le nombre d'objets d'intérêt a été calculé.

Les différentes étapes précédentes sont répétées pour chaque image acquise. On obtient ainsi un nombre d'objets d'intérêt calculé pour chaque image acquise, et donc pour chaque élément fruitier du verger.

### 2.6. *Conversion en niveau de floraison*

Le procédé comprend également une étape 70 consistant à classer les différentes images traitées en catégories (ci-après dénommées « niveau de floraison ») en fonction du nombre d'objets d'intérêt calculé pour chaque image.

Chaque niveau de floraison correspond à une gamme de nombres d'objets d'intérêt calculés. Par exemple :

- le premier niveau de floraison (représentatif des éléments fruitiers les moins fleuris) correspond à un nombre d'objets d'intérêt calculé compris entre 0 et 10,
- le deuxième niveau de floraison correspond à un nombre de d'objets d'intérêt calculé compris entre 11 et 20,
- le troisième niveau de floraison correspond à un nombre d'objets d'intérêt calculé compris entre 21 et 30, etc.

De préférence, le nombre de niveaux de floraison est égal à cinq. Ceci permet d'obtenir des cartes de traitement d'éclaircissage précises et appropriées à la l'hétérogénéité intra-parcellaire.

Bien entendu, l'utilisateur peut choisir de faire varier ce nombre de niveaux de floraison en l'augmentant ou en le diminuant en fonction de ses besoins.

Avantageusement pour chaque niveau de floraison, une image échantillon correspondant à une image initiale acquise dont le nombre d'objets d'intérêt calculé satisfait audit niveau de floraison peut-être affichée à l'utilisateur. Ceci permet à l'utilisateur d'évaluer plus précisément à quel aspect d'élément fruitier de son verger chaque niveau de floraison correspond.

Pour déterminer les seuils de chaque niveau de floraison, deux méthodes distinctes peuvent être utilisées. Bien entendu, l'utilisateur a la possibilité de modifier ces seuils en fonction de ses besoins.

### 2.6.1. *Première méthode de détermination des niveaux de floraison*

Une première méthode peut consister à déterminer les seuils des niveaux de floraison en fonction du nombre d'objets d'intérêt calculés $T_{max}$ pour l'élément fruitier le plus fleuri en appliquant la formule suivante :

$$\text{Seuil } n = T_{max} * (1-(n/15)), \text{ avec } 1 \leq n \leq 4.$$

### 2.6.2. *Deuxième méthode de détermination des niveaux de floraison*

Une deuxième méthode peut consister à déterminer les seuils des niveaux de floraison en fonction d'une courbe de tendance de l'histogramme des nombres d'objets d'intérêt calculés pour l'ensemble des éléments fruitiers du verger.

Plus précisément, les seuils des niveaux de floraison sont définis comme les minimums de la courbe de tendance de l'histogramme des nombres d'objets d'intérêt calculés pour l'ensemble des éléments fruitiers du verger.

### 3. *Post-traitements*

A la suite de l'étape de classification des nombres d'objets d'intérêt calculés par niveau de floraison, les résultats du traitement (i.e. position de l'élément fruitier et niveau de floraison associée) peuvent être envoyés à une console de modulation d'un dispositif d'éclaircissage de l'utilisateur, la console de modulation permettant de régler la quantité de produit chimique d'éclaircissage à pulvériser sur chaque élément fruitier.

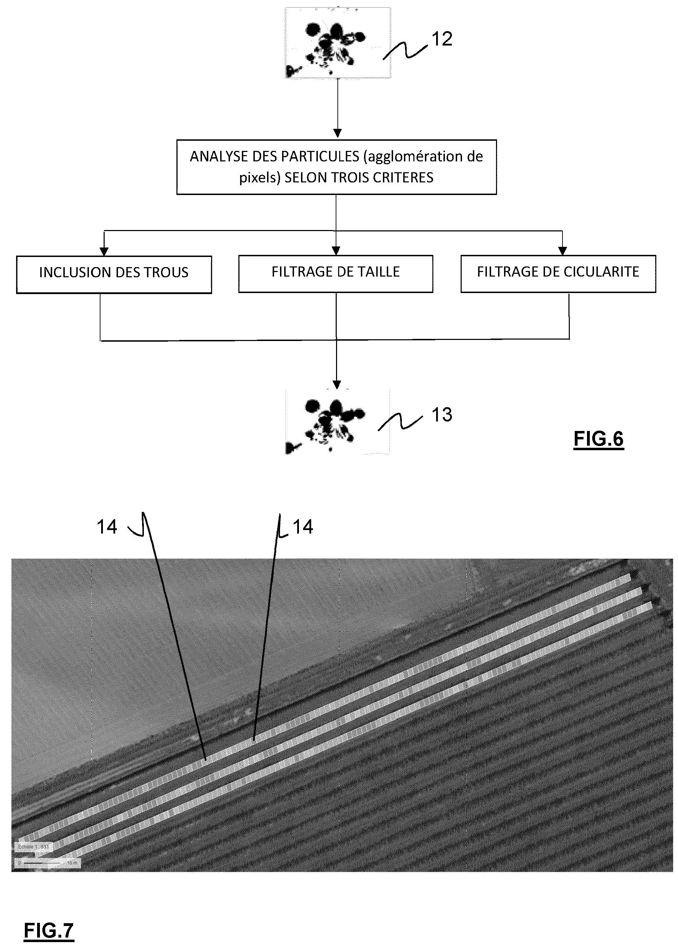

En variante ou en combinaison, ces résultats de traitement peuvent être affichés au moyen d'un code couleur 14 sur une vue aérienne du verger, tel qu'illustré sur la figure 7.

Lorsque le dispositif d'éclaircissage de l'utilisateur ne dispose pas d'une console de modulation lui permettant de réguler la quantité de produit chimique d'éclaircissage à appliquer élément fruitier par élément fruitier, des étapes de post-traitement décrites ci-après peuvent être mises en oeuvre pour fusionner (i.e. rassembler) les niveaux de floraison de chaque élément fruitier par zones.

La fusion des niveaux de floraison par zones 15, 16, 17 tient compte de l'organisation des éléments fruitiers en verger. Notamment, les éléments fruitiers étant organisés par rangs, la fusion par zones 15, 16, 17 se fait par rang, en une ou plusieurs passes.

L'une des conditions de fusion peut consister à considérer un voisinage d'éléments fruitiers le long du rang d'intérêt. Pour chaque élément fruitier d'intérêt d'un rang considéré, son niveau de floraison associé est par exemple rendu égal au niveau de floraison des éléments fruitiers voisins de l'élément fruitier d'intérêt dans le rang considéré si deux éléments fruitiers voisins précèdent l'élément fruitier d'intérêt et deux éléments fruitiers voisins suivant l'élément fruitier d'intérêt ont un même niveau de floraison différent du niveau de floraison de l'élément fruitier d'intérêt.

Cette étape de fusion des niveaux de floraison de chaque élément fruitier par zones 15, 16, 17 permet d'obtenir des zones homogènes de niveaux de floraison d'éléments fruitiers le long des rangs du verger afin de faciliter la mise en oeuvre du traitement chimique d'éclaircissage par l'utilisateur.

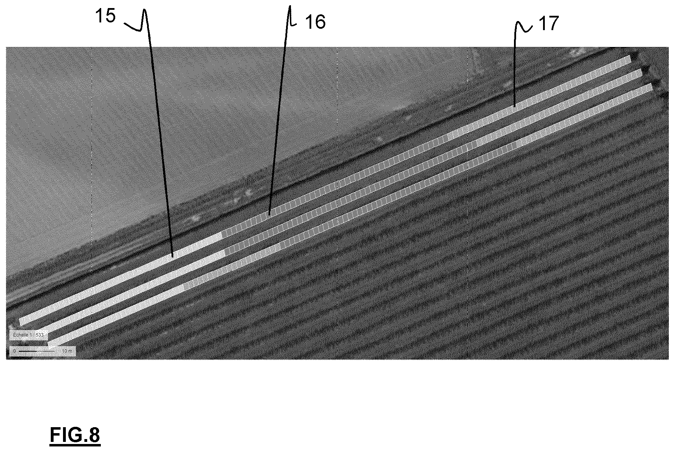

Les résultats de cette étape de post-traitement peuvent être affichés au moyen d'un code couleur sur une image aérienne du verger, tel qu'illustré sur la figure 8.

### 4. Conclusions

Le procédé et le système de gestion décrits précédemment permettent la production d'une carte de floraison relative de l'ensemble du verger afin de réaliser un éclaircissage modulable dans le but d'optimiser la production (qualité, calibre/taille des fruits et le volume de production globale).

Le procédé et le système décrits ci-dessus permettent également :

- de diminuer les intrants chimiques de l'éclaircissage en optimisant leur utilisation (la bonne dose au bon endroit),
- de réguler l'alternance du verger d'une année sur l'autre,
- d'optimiser d'autres interventions techniques dans le verger liées à l'intensité de la floraison, comme l'apport d'engrais ou les opérations de chantiers de récolte ou de taille des vergers.

Le lecteur aura compris que de nombreuses modifications peuvent être apportées à l'invention décrite précédemment sans sortir matériellement des nouveaux enseignements et des avantages décrits ici.

Notamment le lecteur appréciera que les phases de traitement et de post-traitement sont indépendantes. Plus précisément, les étapes de post-traitement décrites au pixel 3 peuvent être mises en oeuvre sur la base de niveaux de floraison déterminés avec d'autres méthodes que la phase de traitement décrite au pixel 2.

Également, le lecteur appréciera que la (ou les) image(s) numérique(s) acquise(s) en couleur, et codée en composantes de Rouge, de Vert et de Bleu peut (peuvent) être convertie(s) en une (ou des) image(s) convertie(s) TSB (ou « HSB » en anglais pour « Hue Saturation Brightness ») codée en composantes de Teinte, de Saturation et de Brillance. Dans ce cas, les différentes opérations de filtrage, de combinaison et de calcule d'un plan de travail sont réalisées à partir des composantes de Teinte, de Saturation et de Brillance plutôt qu'à partir des composantes de Teinte, de Saturation et de Luminosité.

Par conséquent, toutes les modifications de ce type sont destinées à être incorporées à l'intérieur de la portée des revendications jointes.

## Revendications

1. Procédé d'aide à la décision pour la gestion d'un verger d'arbres fruitiers, le procédé comprenant les phases suivantes :

   - Réception (10) d'une pluralité d'images numériques acquises en couleur le long des rangs du verger, chaque image représentant un élément fruitier respectif du verger,
   - Traitement (20-70) de la pluralité d'images acquises, ladite phase de traitement comprenant, pour chaque image courante de la pluralité d'images, les étapes suivantes :

○ Détection des objets d'intérêt dans chaque image courante,
○ Comptage du nombre d'objets d'intérêt détectés dans chaque image courante,
○ Détermination d'un niveau de floraison pour chaque image courante en fonction du nombre d'objets d'intérêt compté pour ladite image courante,

- Post-traitement de la pluralité d'images traitées, ladite phase de post-traitement comprenant les étapes suivantes :

○ Fusion des niveaux de floraison des éléments fruitiers par zones le long des rangs du verger,
○ Génération d'une carte des niveaux de floraisons des éléments fruitiers du verger.

2. Procédé selon la revendication 1, *dans lequel* l'étape de fusion consiste à attribuer à chaque élément fruitier considéré dans un rang du verger le niveau de floraison des éléments fruitiers voisins dudit élément fruitier considéré dans son rang si au moins un élément fruitier voisin précédent l'élément fruitier considéré et au moins un élément fruitier voisin suivant l'élément fruitier considéré dans son rang ont un même niveau de floraison différent du niveau de floraison de l'élément fruitier considéré.

3. Procédé selon l'une quelconque des revendications 1 ou 2, *dans lequel* l'étape de comptage du nombre d'objets d'intérêt détectés consiste à compter un nombre de groupements de pixels connexes représentatifs d'au moins un objet d'intérêt et/ou un nombre de pixels représentatifs d'au moins un objet d'intérêt.

4. Procédé selon l'une quelconque des revendications 1 à 3, *dans lequel* l'étape de détermination d'un niveau de floraison pour chaque image courante consiste à assigner un niveau de floraison à ladite image courante en fonction du nombre d'objets d'intérêt comptés dans ladite image courante, chaque niveau de floraison correspondant à une plage de nombres d'objets d'intérêt.

5. Procédé selon l'une quelconque des revendications 1 à 4, *lequel* comprend en outre une étape d'affichage des niveaux de floraison associés à la pluralité d'image sur une vue du verger, ladite étape d'affichage comprenant les sous-étapes consistant à :

▪ pour chaque image courante, détecter la position dans la vue du verger, de l'élément fruitier représenté dans l'image courante à partir de données de position associées à ladite image courante, les données de position correspondant à la position d'un dispositif d'acquisition d'image lors de l'acquisition de l'image courante,
▪ superposer une forme colorée sur la position détectée dans la vue du verger, la couleur de la forme étant représentative d'un niveau de floraison de l'élément fruitier.

6. Procédé selon la revendication 5, *dans lequel* l'étape d'affichage comprend en outre une sous-étape consistant à afficher, pour chaque niveau de floraison, une image échantillon correspondant à une image initiale acquise dont le nombre d'objets d'intérêt calculé satisfait audit niveau de floraison.

7. Procédé selon l'une des revendications 1 à 6, *dans lequel* l'étape de détermination d'un niveau de floraison comprend une sous-étape consistant à déterminer des seuils de chaque niveau de floraison en fonction du nombre d'objets d'intérêt calculés $T_{max}$ pour l'élément fruitier le plus fleuri en appliquant la formule suivante :

$$\text{Seuil } n = T_{max} * (1-(n/15)), \text{ avec } 1 \leq n \leq 4.$$

8. Procédé selon l'une quelconque des revendications 1 à 6, *dans lequel* l'étape de détermination d'un niveau de floraison comprend une sous-étape consistant à déterminer des seuils de chaque niveau de floraison en fonction d'une courbe de tendance d'un histogramme des nombres d'objets d'intérêt calculés pour l'ensemble des éléments fruitiers du verger.

9. Procédé selon l'une quelconque des revendications 1 à 8, *dans lequel* la phase de post-traitement comprend en outre une étape consistant à envoyer la carte des niveaux de floraisons générée à une console de modulation d'un dispositif d'éclaircissage, la console de modulation permettant de régler la quantité de produit chimique d'éclaircissage à pulvériser sur chaque élément fruitier en fonction du niveau de floraison attribué audit élément fruitier.

10. Système d'aide à la décision pour la gestion d'un verger d'arbres fruitiers, comprenant des moyens pour la mise en oeuvre du procédé selon l'une quelconque des revendications 1 à 9.

11. Produit programme d'ordinateur comprenant des instructions de code de programmation destinées à exécuter les étapes du procédé selon l'une quelconque des revendications 1 à 9 lorsque ledit programme est exécuté sur un ordinateur.

**Patentansprüche**

1. Verfahren zur Entscheidungsunterstützung bei der Verwaltung eines Obstbaum-Obstgartens, wobei das Verfahren die folgenden Phasen umfasst:

   - Empfangen (10) einer Vielzahl von digitalen Bildern, die in Farbe entlang der Reihen des Obstgartens aufgenommen werden, wobei jedes Bild ein jeweiliges Fruchtelement des Obstgartens darstellt,
   - Verarbeiten (20-70) der Vielzahl der aufgenommenen Bilder, wobei die Verarbeitungsphase für jedes aktuelle Bild von der Vielzahl von Bildern die folgenden Schritte umfasst:

      ◦ Erkennen von Objekten von Interesse in jedem aktuellen Bild,
      ◦ Zählen der Anzahl der in jedem aktuellen Bild erkannten Objekte von Interesse,
      ◦ Bestimmen einer Blühniveaustufe für jedes aktuelle Bild in Abhängigkeit von der Anzahl der gezählten Objekte von Interesse für das aktuelle Bild,

   - Nachverarbeiten der Vielzahl der verarbeiteten Bilder, wobei die Nachverarbeitungsphase die folgenden Schritte umfasst:

      ◦ Zusammenführen der Blühniveaustufen der Fruchtelemente nach Zonen entlang der Reihen des Obstgartens,
      ◦ Erstellen einer Blühniveaustufenkarte der Fruchtelemente des Obstgartens.

2. Verfahren nach Anspruch 1, wobei der Schritt des Zusammenführens darin besteht, jedem betrachteten Fruchtelement in einer Reihe des Obstgartens die Blühniveaustufe der benachbarten Fruchtelemente des betrachteten Fruchtelements in seiner Reihe zuzuordnen, wenn mindestens ein benachbartes Fruchtelement, das dem betrachteten Fruchtelement vorausgeht, und mindestens ein benachbartes Fruchtelement, das dem betrachteten Fruchtelement folgt, in seiner Reihe eine gleiche Blühniveaustufe haben, die sich von der Blühniveaustufe des betrachteten Fruchtelementes unterscheidet.

3. Verfahren nach einem der Ansprüche 1 oder 2, wobei der Schritt des Zählens der Anzahl der erkannten Objekte von Interesse darin besteht, eine Anzahl von Gruppierungen verwandter Pixel, die für mindestens ein Objekt von Interesse repräsentativ sind, und/oder eine Anzahl von Pixeln, die für mindestens ein Objekt von Interesse repräsentativ sind, zu zählen.

4. Verfahren nach einem der Ansprüche 1 bis 3, wobei der Schritt des Bestimmens einer Blühniveaustufe für jedes aktuelle Bild darin besteht, dem aktuellen Bild in Abhängigkeit von der Anzahl der in dem aktuellen Bild gezählten Objekte von Interesse eine Blühniveaustufe zuzuweisen, wobei jede Blühniveaustufe einem Anzahlbereich von Objekten von Interesse entspricht.

5. Verfahren nach einem der Ansprüche 1 bis 4, das ferner einen Schritt des Anzeigens der der Vielzahl von Bildern zugewiesenen Blühniveaustufen auf einer Ansicht des Obstgartens umfasst, wobei der Anzeigeschritt die Unterschritte umfasst, die darin bestehen:

   ▪ für jedes aktuelle Bild in der Ansicht des Obstgartens die Position des im aktuellen Bild dargestellten Fruchtelements anhand von Positionsdaten, die dem aktuellen Bild zugewiesen sind, zu erfassen, wobei die Positionsdaten der Position einer Bildaufnahmevorrichtung bei der Aufnahme des aktuellen Bildes entsprechen,
   ▪ eine farbige Form auf der in der Ansicht des Obstgartens erfasste Position zu überlagern, wobei die Farbe der Form für eine Blühniveaustufe des Fruchtelements repräsentativ ist.

6. Verfahren nach Anspruch 5, wobei der Anzeigeschritt ferner einen Unterschritt umfasst, der darin besteht, für jede Blühniveaustufe ein Musterbild anzuzeigen, das einem aufgenommenen Ausgangsbild entspricht, dessen berechnete Anzahl von Objekten von Interesse die Blühniveaustufe erfüllt.

7. Verfahren nach einem der Ansprüche 1 bis 6, wobei der Schritt des Bestimmens einer Blühniveaustufe einen Unterschritt umfasst, der darin besteht, Schwellenwerte jeder Blühniveaustufe in Abhängigkeit von der berechneten Anzahl von Objekten von Interesse $T_{max}$ für das am stärksten blühende Fruchtelement zu bestimmen durch Anwendung der folgenden Formel:

$$\texttt{Schwellenwert n = } T_{max}\texttt{*(1-(n/15),}$$

mit $1 \leq n \leq 4$.

8. Verfahren nach einem der Ansprüche 1 bis 6, wobei der Schritt des Bestimmens einer Blühniveaustufe einen Unterschritt umfasst, der darin besteht, die Schwellenwerte jeder Blühniveaustufe in Abhängigkeit von einer Trendkurve eines Histogramms der Anzahlen von Objekten von Interesse zu bestimmen, die für alle Fruchtelemente des Obstgartens berechnet wurden.

9. Verfahren nach einem der Ansprüche 1 bis 8, wobei die Nachbearbeitungsphase ferner einen Schritt umfasst, der darin besteht, die erzeugte Blühniveaustufenkarte an eine Modulationskonsole einer Ausdünnungsvorrichtung zu senden, wobei die Modulationskonsole das Einstellen der Menge der Ausdünnungschemikalie ermöglicht, die auf jedes Fruchtelement in Abhängigkeit von der dem Fruchtelement zugewiesenen Blühniveaustufe zu sprühen ist.

10. System zur Entscheidungsunterstützung bei der Verwaltung eines Obstbaum-Obstgartens, umfassend Mittel zur Durchführung des Verfahrens nach einem der Ansprüche 1 bis 9.

11. Rechnerprogrammprodukt, umfassend Programmiercodebefehle zur Ausführung der Schritte des Verfahrens nach einem der Ansprüche 1 bis 9, wenn das Programm auf einem Rechner ausgeführt wird.

**Claims**

1. A decision support method for the management of a fruit tree orchard, said method comprising the following phases:

- Receiving (10) a plurality of digital images acquired in color along rows of the fruit tree orchard, each image representing a respective fruit element of the fruit tree orchard,
- Processing (20-70) of the plurality of acquired images said processing phase comprising, for each current image of the plurality of images, the following steps:

  ◦ Detecting objects of interest in each current image,
  ◦ Counting the number of objects of interest detected in each current image,
  ◦ Determining a blooming level for each current image as a function of the number of objects of interest counted for said current image,

- Post-processing the plurality of processed images, said post-processing phase comprising the following steps:

  ◦ Merging the blooming levels of the fruit elements by areas along the rows of the fruit tree orchard,
  ◦ Generating a map of the blooming levels of the fruit elements of the fruit tree orchard.

2. The method according to claim 1, *wherein* the merging step consists in assigning to each fruit element considered in a row of the fruit tree orchard the blooming level of the fruit elements adjacent to said fruit element considered in its row if at least one adjacent fruit element preceding the considered fruit element and at least one adjacent fruit element following the fruit element considered in its row have the same blooming level different from the blooming level of the considered fruit element.

3. The method according to anyone of claims 1 or 2, *wherein* the step of counting the number of detected objects of interest consists in counting a number of groupings of related pixels representative of at least one object of interest and/or a number of pixels representative of at least one object of interest.

4. The method according to anyone of claims 1 to 3 , *wherein* the step of determining a blooming level for each current image consists in assigning a blooming level to said current image as a function of the number of objects of interest counted in said current image, each blooming level corresponding to a range of numbers of objects of interest.

5. The method according to anyone of claims 1 to 4, *which* further comprises a step of displaying the blooming levels associated with the plurality of images on a view of the fruit tree orchard, said displaying step comprising the sub-steps of:

   ▪ for each current image, detecting the position, in the view of the fruit tree orchard, of the fruit element represented in the current image from position data associated with said current image, the position data corresponding to the position of an image acquisition device during the acquisition of the current image,
   ▪ superimposing a colored shape on the position detected in the view of the fruit tree orchard, the color of the colored shape being representative of a blooming level of the fruit element.

6. The method according to claim 5, *wherein* the displaying step further comprises a sub-step consisting in displaying, for each blooming level, a sample image corresponding to an initial acquired image for which the calculated number of objects of interest satisfies said blooming level.

7. The method according to anyone of claims 1 to 6, *wherein* the step of determining a blooming level comprises a sub-step consisting in determining thresholds of each blooming level as a function of the calculated number of objects of interest $T_{max}$ for the fruit element the most in bloom by applying the following formula:

$$\text{Threshold n} = T_{max} * (1-(n/15)),$$

with $1 \leq n \leq 4$.

8. The method according to anyone of claims 1 to 6, *wherein* the step of determining a blooming level comprises a sub-step consisting in determining thresholds of each blooming level according to a trend curve of a histogram of the calculated numbers of objects of interest for the set of fruit elements of the fruit tree orchard.

9. The method according to anyone of claims 1 to 8, *wherein* the post-processing phase further comprises a step consisting in sending the generated blooming levels map to a modulation console of a thinning device, the modulation console allowing adjustment of the thinning chemical quantity to be sprayed on each fruit element as a function of the blooming level assigned to each fruit element.

10. A decision support system for the management of a fruit tree orchard, said decision support system comprising means for implementing the method according to anyone of claims 1 to 9.

11. A computer program product comprising programming code instructions intended to execute the steps of the method according to anyone of claims 1 to 9 when said program is executed on a computer.

**FIG.1**

Saturation

Teinte

Luminosité

**FIG.2**

```
                  ┌──────────────────────────────────┐
                  │      RECEPTION DES IMAGES         │ ⟋⟋  10
                  └──────────────────────────────────┘
                                   │
                                   ▼
         ┌──────────────────────────────────────────────┐
   ┌────▶│       CONVERSION TSL IMAGE COURANTE           │ ⟋⟋ 20
   │     └──────────────────────────────────────────────┘
   │                               │
   │                               ▼                              ⟋ 30
   │   ┌────────────────────────────────────────────────────────┐
   │   │           FILTRAGE IMAGE COURANTE                       │
   │   │                                                          │
   │   │  -  Filtrage Plan de Teinte pour obtenir Plan de Teinte Filtré
   │   │  -  Filtrage Plan de Saturation pour obtenir Plan de Saturation Filtré
   │   │  -  Filtrage Plan de Luminosité pour obtenir Plan de Luminosité Filtré
   │   └────────────────────────────────────────────────────────┘
   │                               │
   │                               ▼                              ⟋ 40
   │     ┌──────────────────────────────────────────────────────┐
   │     │        COMBINAISON PLANS IMAGE COURANTE               │
   │     │                                                        │
   │     │  -  Plan de Teinte Filtré + Plan de Luminosité Filtré = Plan Sommé
   │     │  -  Moyenne (Plan de Saturation Filtré, Plan de Luminosité Filtré)
   │     │     = Plan Moyenné
   │     │  -  Moyenne (Plan Sommé, Plan Moyenné) = Plan Résultant
   │     │  -  Seuillage Plan Résultant = Plan Combiné
   │     └──────────────────────────────────────────────────────┘
   │                               │
   │                               ▼                              ⟋ 50
   │     ┌──────────────────────────────────────────────────────┐
   │     │       ANALYSE PLAN COMBINE IMAGE COURANTE             │
   │     │                                                        │
   │     │  -  Inclusion des trous dans le Plan Combiné,          │
   │     │  -  Filtrage en fonction de la Taille des Particules,  │
   │     │  -  Filtrage en fonction de la circularité             │
   │     │                                                        │
   │     │     ⇨  Obtention Plan de Travail                       │
   │     └──────────────────────────────────────────────────────┘
   │                               │
   │                               ▼                              ⟋ 60
   │     ┌──────────────────────────────────────────────────────┐
   │     │   COMPTAGE SUR PLAN DE TRAVAIL IMAGE COURANTE         │
   │     └──────────────────────────────────────────────────────┘
   │                               │
   │                               ▼
   │                         ╱──────────╲
   │              NON       ╱ Toutes les ╲
   └──────────────────────◀   images      ▶
                           ╲  traitées ?  ╱
                            ╲────────────╱
                                   │  OUI
                                   ▼                              ⟋ 70
                  ┌──────────────────────────────────┐
                  │          CONVERSION              │ ⟋⟋
                  └──────────────────────────────────┘
                                   │
                                   ▼
                  ┌──────────────────────────────────┐
                  │        POST-TRAITEMENT           │
                  └──────────────────────────────────┘
```

**FIG.3**

**FIG.4**

**FIG.5**

ANALYSE DES PARTICULES (agglomération de pixels) SELON TROIS CRITERES

| INCLUSION DES TROUS | FILTRAGE DE TAILLE | FILTRAGE DE CICULARITE |

**FIG.6**

**FIG.7**

**FIG.8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RUPINDER KAUR et al.** An Optimized Computer Vision Approach to Précisé Well-Bloomed Flower Yielding Prédiction using Image Segmentation. *International Journal of Computer Applications*, June 2015, vol. 119 (23), 15-20

- Yield prédiction in apple orchards based on image processing. **AGGELOPOULOU et al.** Précision Agriculture. KLuwer Academic Publishers, 17 August 2010, vol. 12, 448-456